# EUROPEAN PATENT APPLICATION

(11) **EP 4 467 028 A1**
(43) Date of publication of application: **27.11.2024**
(21) Application number: 22933423.0
(22) Date of filing: 24.03.2022
(51) Int. Cl.: A24F 40/57

(54) **AEROSOL GENERATION SYSTEM, CONTROL METHOD, AND PROGRAM**

(71) Applicant: Japan Tobacco Inc., Tokyo 105-6927 (JP)
(72) Inventor: MINATO, Junji, Tokyo 130-8603 (JP); NAGAHAMA, Toru, Tokyo 130-8603 (JP); AOYAMA, Tatsunari, Tokyo 130-8603 (JP)
(74) Representative: Hoffmann Eitle
(86) International application number: PCT/JP2022/014059
(87) International publication number: WO 2023/181282

(57) **Abstract**

[Problem] To provided a mechanism capable of further improving the quality of a user's experience.

[Solution] An aerosol generation system comprising: a heating unit that heats an aerosol source; a temperature sensor that detects the temperature of the heating unit from outside the heating unit; and a control unit that controls the operation of the heating unit on the basis of control information including a parameter corresponding to a target temperature which is a target value of the temperature of the heating unit, wherein the control unit controls the operation of the heating unit by performing a correction process to correct the target temperature or the temperature of the heating unit detected by the temperature sensor, during a period in which the operation of the heating unit is controlled on the basis of the temperature of the heating unit detected by the temperature sensor

## Description

### Technical Field

The present invention relates to an aerosol generation system, a control method, and a program.

### Background Art

Inhaler devices designed to generate material to be inhaled by users, such as electronic cigarettes and nebulizers, are widely used. For example, an inhaler device generates an aerosol containing a flavor component by using a substrate containing, for example, an aerosol source used to generate an aerosol and a flavor source used to impart the flavor component to the generated aerosol. The user inhales the aerosol containing the flavor component, generated by the inhaler device, to taste the flavor. The user's action of inhaling aerosol is also referred to as puff or puff action in the following.

In recent years, various technologies aimed at enhancing the quality of user experiences with inhaler devices have been studied. For example, Patent Literature 1, listed below, discloses a technology designed to control the power supplied to a heater for heating an aerosol-generating substrate using a proportional-integral-differential (PID) method.

### Citation List

### Patent Literature

Patent Literature 1: JP 2021-512603 A

### Summary of Invention

### Technical Problem

However, because the technology disclosed in the patent literature listed above was developed recently, there is still room for improvement in many aspects.

The present invention has been made in consideration of the problem described above, and an object of the present invention is to provide a mechanism that enhances the quality of user experiences.

### Solution to Problem

To address the problem described above, in one aspect of the present invention, an aerosol generation system includes a heater configured to heat an aerosol source, a temperature sensor configured to detect a temperature of the heater from outside the heater, and a controller configured to control an operation of the heater in accordance with a control information set that includes a parameter corresponding to a target temperature, the target temperature being a target value of the temperature of the heater. The controller is configured to, during a period when controlling the operation of the heater based on the temperature of the heater detected by the temperature sensor, perform an adjustment operation that adjusts the target temperature or the temperature of the heater detected by the temperature sensor and accordingly control the operation of the heater.

The controller may be configured to, in the adjustment operation, adjust the target temperature or the temperature of the heater detected by the temperature sensor, based on a parameter corresponding to an initial temperature of the heater.

The controller may be configured to adjust the target temperature downward by an adjustment amount. Compared to when the initial temperature of the heater is a first temperature, the adjustment amount may be greater when the initial temperature of the heater is a second temperature that is lower than the first temperature.

The controller may be configured to adjust the temperature of the heater detected by the temperature sensor upward by an adjustment amount. Compared to when the initial temperature of the heater is a first temperature, the adjustment amount may be greater when the initial temperature of the heater is a second temperature that is lower than the first temperature.

The control information set may be one of a plurality of control information sets, each control information set including a parameter corresponding to a target temperature that is a target value of the temperature of the heater, the controller may be configured to control the operation of the heater in accordance with a control information set selected from the plurality of control information sets, and the controller may be configured to use a predetermined value as the adjustment amount regardless of which of the plurality of control information sets is selected.

The controller may be configured to change the adjustment amount based on a time elapsed after heating of the aerosol source according to the control information set is started.

The control information set may include information of a plurality of unit periods that have different change patterns in the temperature of the heater. The controller may be configured to perform the adjustment operation and determines to proceed from a specific unit period among the plurality of unit periods in response to a trigger from the temperature of the heater detected by the temperature sensor reaching the target temperature that is set for the specific unit period.

The controller may be configured to perform the adjustment operation during a specific unit period in which the temperature of the heater increases or decreases among the plurality of unit periods.

The aerosol generation system may include a power supply. The heater may be configured to heat the aerosol source using power supplied from the power supply. The controller may be configured to perform the adjustment operation during a specific unit period in which power supply to the heater is stopped among the plurality of unit periods, and in response to a trigger from the temperature of the heater detected by the temperature sensor decreasing to the target temperature that is set for the specific unit period, restart power supply to the heater.

The controller may be configured to perform the adjustment operation during a first half of a period of controlling the operation of the heater in accordance with the control information set.

A period of controlling the operation of the heater in accordance with the control information set may include a period of controlling the operation of the heater based on an electrical resistance of the heater instead of the temperature of the heater detected by the temperature sensor.

The aerosol generation system may further include a substrate containing the aerosol source configured to be heated by the heater.

To address the problem described above, in another aspect of the present invention, a control method is configured to control an aerosol generation system. The aerosol generation system includes a heater configured to heat an aerosol source and a temperature sensor configured to detect a temperature of the heater from outside the heater. The control method includes controlling an operation of the heater in accordance with a control information set that includes a parameter corresponding to a target temperature, the target temperature being a target value of the temperature of the heater. The controlling the operation of the heater in accordance with the control information set includes, during a period when controlling the operation of the heater based on the temperature of the heater detected by the temperature sensor, performing an adjustment operation that adjusts the target temperature or the temperature of the heater detected by the temperature sensor and accordingly controlling the operation of the heater.

To address the problem described above, in another aspect of the present invention, a program is configured to be executed by a computer for controlling an aerosol generation system. The aerosol generation system includes a heater configured to heat an aerosol source and a temperature sensor configured to detect a temperature of the heater from outside the heater. The program is configured to cause the computer to operate as a controller configured to control an operation of the heater in accordance with a control information set that includes a parameter corresponding to a target temperature, the target temperature being a target value of the temperature of the heater. The controller is configured to, during a period when controlling the operation of the heater based on the temperature of the heater detected by the temperature sensor, perform an adjustment operation that adjusts the target temperature or the temperature of the heater detected by the temperature sensor and accordingly control the operation of the heater.

### Advantageous Effects of Invention

As described above, the present invention provides a mechanism that enhances the quality of user experiences.

### Brief Description of Drawings

[Fig. 1] Fig. 1 is a schematic diagram illustrating a configuration example of an inhaler device.
[Fig. 2] Fig. 2 is a graph illustrating an example of temperature changes of a heater when temperature control is performed in accordance with the heating profile indicated in Table 1.
[Fig. 3] Fig. 3 illustrates an example of control based on a thermistor temperature according to an embodiment.
[Fig. 4] Fig. 4 illustrates an example of control based on a thermistor temperature according to the embodiment.
[Fig. 5] Fig. 5 is a flowchart illustrating an exemplary process flow performed by the inhaler device according to the embodiment.

### Description of Embodiments

Hereinafter, a preferred embodiment of the present invention will be described in detail with reference to the accompanying drawings. In this specification and accompanying drawings, structural elements having substantially the same functional configuration features are denoted by the same reference numerals, and redundant descriptions thereof will not be repeated.

### 1. Configuration example of inhaler device

An inhaler device generates material to be inhaled by a user. In the example described below, the material generated by the inhaler device is an aerosol. Alternatively, the material generated by the inhaler device may be gas.

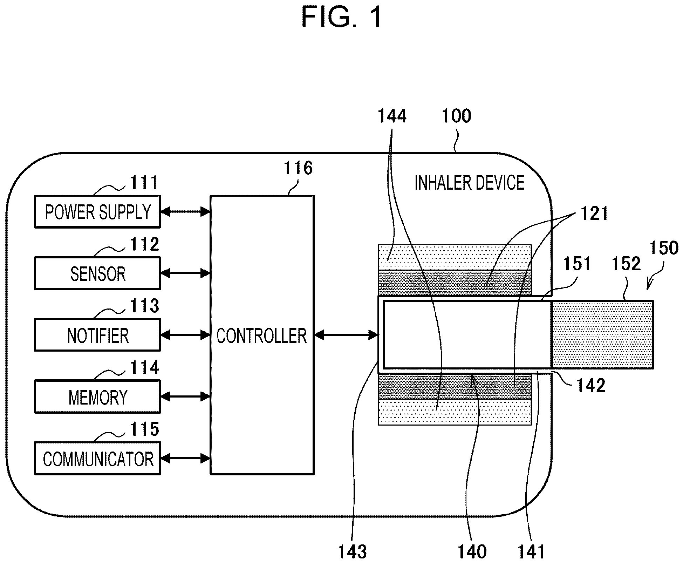

Fig. 1 is a schematic diagram of the inhaler device according to the configuration example. As illustrated in Fig. 1, an inhaler device 100 according to the present configuration example includes a power supply 111, a sensor 112, a notifier 113, a memory 114, a communicator 115, a controller 116, a heater 121, a holder 140, and a heat insulator 144.

The power supply 111 stores electric power. The power supply 111 supplies electric power to the structural elements of the inhaler device 100 under the control of the controller 116. The power supply 111 may be a rechargeable battery such as a lithium ion secondary battery.

The sensor 112 acquires various items of information regarding the inhaler device 100. In an example, the sensor 112 may be a pressure sensor such as a condenser microphone, a flow sensor, or a temperature sensor, and acquire a value generated in accordance with the user's inhalation. In another example, the sensor 112 may be an input device that receives information input by the user, such as a button or a switch.

The sensor 112 additionally includes a thermistor. The thermistor is an example of a temperature sensor that detects the temperature of the heater 121 from outside the heater 121. The thermistor is positioned near the heater 121 to be warmed by the heat from the heater 121. As a result, the temperature of the thermistor is detected as the temperature of the heater 121. The thermistor may be, for example, a negative temperature coefficient (NTC) thermistor, positive temperature coefficient (PTC) thermistor, or critical temperature resistor (CTR) thermistor. The temperature sensor that detects the temperature of the heater 121 from outside the heater 121 may be a resistance thermometer constructed from a material such as platinum. A resistance thermometer is also referred to as a resistance temperature detector (RTD).

The notifier 113 provides information to the user. The notifier 113 may be a light-emitting device that emits light, a display device that displays an image, a sound output device that outputs sound, or a vibration device that vibrates.

The memory 114 stores various items of information for operation of the inhaler device 100. The memory 114 may be a non-volatile storage medium such as flash memory.

The communicator 115 is a communication interface capable of communication in conformity with any wired or wireless communication standard. The communication standard is, for example, Wi-Fi (registered trademark), Bluetooth (registered trademark), or a standard using low power wide area (LPWA).

The controller 116 functions as an arithmetic processing unit and a control circuit, and controls the overall operations of the inhaler device 100 in accordance with various programs. The controller 116 includes an electronic circuit such as a central processing unit (CPU) and a microprocessor, for example.

The holder 140 has an internal space 141, and holds a stick substrate 150 in a manner partially accommodated in the internal space 141. The holder 140 has an opening 142 that allows the internal space 141 to communicate with outside. The holder 140 holds the stick substrate 150 that is inserted into the internal space 141 through the opening 142. For example, the holder 140 may be a tubular body having the opening 142 and a bottom 143 on its ends, and may define the pillar-shaped internal space 141. The holder 140 connects with an airflow path that supplies air to the internal space 141. For example, a side surface of the inhaler device 100 has an air inlet hole that is an inlet of air into the airflow path. For example, the bottom 143 has an air outlet hole that is an outlet of the air from the airflow path to the internal space 141.

The stick substrate 150 includes a substrate 151 and an inhalation port 152. The substrate 151 includes an aerosol source. The aerosol source is a liquid such as polyhydric alcohol or water. Examples of the polyhydric alcohol include glycerine and propylene glycol. The aerosol source may include a flavor component that is either derived from tobacco or not derived from tobacco. For the inhaler device 100 that is a medical inhaler such as a nebulizer, the aerosol source may include a medicine. In the present configuration example, the aerosol source is not limited to a liquid, but may be a solid. The stick substrate 150 held by the holder 140 includes the substrate 151 at least partially accommodated in the internal space 141 and the inhalation port 152 at least partially protruding from the opening 142. When the user inhales with the inhalation port 152 protruding from the opening 142 in his/her mouth, air flows into the internal space 141 through the airflow path (not illustrated), and the air and an aerosol generated from the substrate 151 reach inside the mouth of the user.

The heater 121 heats the aerosol source to atomize the aerosol source and generate the aerosol. In the example illustrated in Fig. 1, the heater 121 has a film-like shape and surrounds the outer circumference of the holder 140. Subsequently, heat produced from the heater 121 heats the substrate 151 of the stick substrate 150 from the outer circumference, generating the aerosol. The heater 121 produces heat when receiving electric power from the power supply 111. In an example, the electric power may be supplied in response to the sensor 112 detecting a start of the user's inhalation and/or an input of predetermined information. Subsequently, the supply of the electric power may be stopped in response to the sensor 112 detecting an end of the user's inhalation and/or an input of predetermined information.

The heat insulator 144 prevents heat from transferring from the heater 121 to the other structural elements. For example, the heat insulator 144 may be a vacuum heat insulator or an aerogel heat insulator.

The configuration example of the inhaler device 100 has been described above. The inhaler device 100 is not limited to the above configuration, and may be configured in various ways as exemplified below.

In an example, the heater 121 may have a blade-like shape, and may be disposed so that the heater 121 protrudes from the bottom 143 of the holder 140 toward the internal space 141. In this case, the heater 121 having the blade-like shape is inserted into the substrate 151 of the stick substrate 150 and heats the substrate 151 of the stick substrate 150 from its inside. In another example, the heater 121 may be disposed so that the heater 121 covers the bottom 143 of the holder 140. In still another example, the heater 121 may be implemented as a combination of two or more selected from a first heater that covers the outer circumference of the holder 140, a second heater having the blade-like shape, and a third heater that covers the bottom 143 of the holder 140.

In another example, the holder 140 may include an opening/closing mechanism that at least partially opens and closes an outer shell defining the internal space 141. Examples of the opening/closing mechanism include a hinge. In addition, the holder 140 may sandwiches the stick substrate 150 inserted into the internal space 141 by opening and closing the outer shell. In this case, the heater 121 may be at the sandwiching position of the holder 140 and may produce heat while pressing the stick substrate 150.

The stick substrate 150 is an exemplary substrate containing an aerosol source, contributing to aerosol generation. The inhaler device 100 is an exemplary aerosol generating device designed to generate an aerosol by heating the stick substrate 150. The combination of the inhaler device 100 and the stick substrate 150 produces an aerosol. Thus, the combination of the inhaler device 100 and the stick substrate 150 may be considered an aerosol generation system.

### 2. Technical feature

### 2. 1. Heating profile

The controller 116 controls the operation of the heater 121 based on a heating profile. Control of the operation of the heater 121 is achieved by controlling the power supplied from the power supply 111 to the heater 121. The heater 121 heats the stick substrate 150 using the electric power supplied from the power supply 111.

A heating profile corresponds to a control information set for controlling the temperature used to heat the aerosol source. A heating profile may correspond to a control information set for controlling the temperature of the heater 121. For example, a heating profile may include a target value (hereinafter also referred to as target temperature) of the temperature of the heater 121. The target temperature may vary with the time elapsed after heating starts. In this case, the heating profile includes information that specifies time-series changes in the target temperature. In another example, the heating profile may include parameters (hereinafter also referred to as power supply parameters) that define the method of supply power to the heater 121. For example, the power supply parameters include parameters indicating the voltage applied to the heater 121, the ON/OFF status of power supply to the heater 121, and the feedback control method employed. The ON/OFF status of power supply to the heater 121 may be considered the ON/OFF status of the heater 121.

The controller 116 controls the operation of the heater 121 to ensure that the temperature (hereinafter also referred to as actual temperature) of the heater 121 changes to match the target temperature defined in the heating profile. The heating profile is typically designed such that the user can taste optimum flavor when the user inhales the aerosol generated from the stick substrate 150. As such, by controlling operation of the heater 121 in accordance with the heating profile, the user can enjoy optimum flavor.

The temperature of the heater 121 may be controlled, for example, using a known feedback control technology. The feedback control technology may be, for example, a proportional-integral-differential (PID) controller. The controller 116 can provide control to supply electric power from the power supply 111 to the heater 121 in pulse form using pulse width modulation (PWM) or pulse frequency modulation (PFM). In this case, the controller 116 is able to control the temperature of the heater 121 by controlling the duty ratio of the electric power pulses or controlling frequency in feedback control. Alternatively, the controller 116 may simply perform on/off control in feedback control. For example, the controller 116 may provide heating with the heater 121 until the actual temperature reaches a target temperature; when the actual temperature reaches the target temperature, the controller 116 may suspend heating with the heater 121; when the actual temperature drops below the target temperature, the controller 116 may restart heating with the heater 121.

It is possible to quantify the temperature of the heater 121 by, for example, measuring or estimating the electrical resistance of the heater 121 (more specifically, the thermal resistor that constitutes the heater 121). This is because the electrical resistance of thermal resistors changes with temperature. The electrical resistance of a thermal resistor can be estimated by, for example, measuring the amount of voltage drop across the thermal resistor. The amount of voltage drop across a thermal resistor can be measured using a voltage sensor that measures the potential difference across the thermal resistor. In another example, the temperature of the heater 121 may be measured using a temperature sensor such as a thermistor disposed close to the heater 121.

The period from the start to the end of aerosol generation using the stick substrate 150 is hereinafter also referred to as the heating session. In other words, the heating session is the period during which power supplied to the heater 121 is controlled in accordance with the heating profile. The start of the heating session is when heating according to the heating profile starts. The end of the heating session is when the amount of the aerosol being generated becomes insufficient. The heating session includes a preheating period and a puff-available period that follows the preheating period. The puff-available period is the time during which an adequate amount of aerosol is expected to be generated. The preheating period is the time from the start of heating until the puff-available period starts. Heating performed during the preheating period is also referred to as preheating.

Table 1 below presents an exemplary heating profile.

**[Table 1]**

| Table 1. Example of heating profile | | | | |
|---|---|---|---|---|
| Period | | Target temperature time-series change | Power supply parameter time-series change | |
| Division | Duration | | Voltage | ON/OFF |
| STEP 0 | - | Increase to 280°C (No time control) | High | ON |
| STEP 1 | 20 seconds | Increase to 300°C | High | ON |
| STEP 2 | 20 seconds | Remain at 300°C | High | ON |
| STEP 3 | - | Decrease to 220°C (No time control) | Change to low | OFF |
| STEP 4 | 20 seconds | Increase to 270°C | Low | ON |
| STEP 5 | 20 seconds | | Low | ON |
| STEP 6 | 20 seconds | | Low | ON |
| STEP 7 | 20 seconds | | Low | ON |
| STEP 8 | 40 seconds | Remain at 270°C | Low | ON |
| STEP 9 | 20 seconds | - | Change to high | OFF |

As illustrated in Table 1, a heating profile may be divided into multiple periods, and for each period, the time-series changes in the target temperature and the time-series changes in the power supply parameters may be specified. In the example illustrated in Table 1, the heating profile is divided into ten periods, from STEP 0 to STEP 9. In each STEP, the time-series changes in the target temperature and the time-series changes in the power supply parameters are specified. STEP, which is specified in the heating profile, is an example of a unit period in the present embodiment.

In STEP 1, 2, and STEP 4 to STEP 9, time control is performed. Time control is designed to terminate each STEP in response to a trigger from the elapse of a predetermined time (specifically, a specific duration that is set for each SET). When time control is performed, the rate of temperature change of the heater 121 may be controlled so that the temperature of the heater 121 reaches the target temperature at the end of the duration. In another example, when time control is performed, the temperature of the heater 121 may be controlled so that the temperature of the heater 121 reaches the target temperature midway through the duration and then remains at the target temperature until the duration elapses.

In STEP 0 and STEP 3, time control is not performed. When time control is not performed, each STEP terminates in response to a trigger from the temperature of the heater 121 reaching a predetermined temperature (specifically, a target temperature that is set for each STEP). Thus, the duration of STEP 0 expands or contracts based on the rate of temperature rise. The duration of STEP 3 expands or contracts based on the rate of temperature drop.

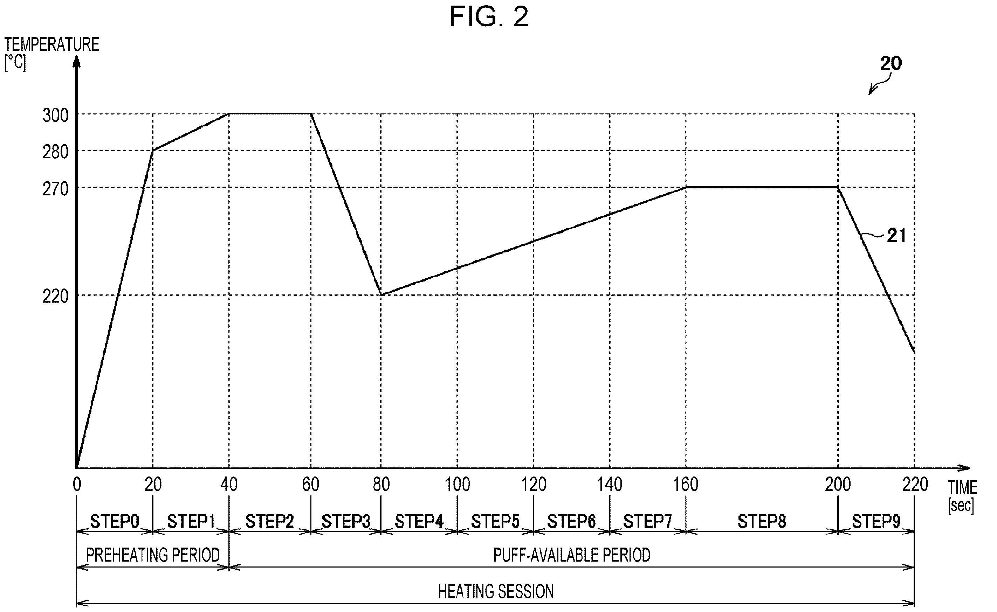

Changes in the temperature of the heater 121 when the controller 116 performs temperature control in accordance with the heating profile indicated in Table 1 will be described with reference to Fig. 2. Fig. 2 provides a graph 20 illustrating an example of temperature changes of the heater 121 when temperature control is performed in accordance with the heating profile indicated in Table 1. The horizontal axis in the graph 20 indicates time (seconds). The vertical axis in the graph 20 indicates the temperature of the heater 121. A line 21 plots changes in the temperature of the heater 121. As illustrated in Fig. 2, the temperature of the heater 121 changes to match the target temperature changes specified in the heating profile. The following details the exemplary heating profile with reference to Table 1 and Fig. 2.

As indicated in Table 1 and Fig. 2, in STEP 0, the temperature of the heater 121 increases to 280°C from an initial temperature. The initial temperature is the temperature of the heater 121 at the start of heating. In STEP 0, time control is not performed. Thus, STEP 0 terminates in response to a trigger from the temperature of the heater 121 reaching 280°C. In the example illustrated in Fig. 2, STEP 0 terminates at 20 seconds. Subsequently, in STEP 1, the temperature of the heater 121 increases to 300°C, and in STEP 2, the temperature of the heater 121 is maintained at 300°C. The preheating period terminates at the end of STEP 1, and the puff-available period begins at the start of STEP 2.

The shorter the preheating time, the more preferable it is for users. When the stick substrate 150 is not sufficiently heated, moisture can evaporate incompletely and remain inside the stick substrate 150. If the user puffs while the stick substrate 150 is in this state, hot vapor can be delivered to the inside of the user's mouth. For this reason, it is desirable that the temperature of the heater 121 is rapidly increased until the temperature reaches 280°C in STEP 0, and that an adequate duration is ensured for STEP 1.

In STEP 0 to STEP 2, power is supplied to the heater 121 at a relatively high voltage. Supplying power at a high voltage allows the temperature of the heater 121 to reach 280°C as quickly as possible and then remain within a range of high temperatures. This configuration also shortens the preheating period.

As indicated in Table 1 and Fig. 2, in STEP 3, the temperature of the heater 121 decreases to 220°C. In STEP 3, power supply to the heater 121 is turned off. As a result, the temperature of the heater 121 decreases as quickly as possible. At the same time, the voltage applied to the heater 121 is changed from high to low. When the voltage is changed while power is being supplied to the heater 121, the precision of temperature control can degrade due to factors such as noise being introduced into the gain of PID control. In this regard, changing the voltage while power is not supplied to the heater 121 prevents the degradation of temperature control precision that can occur with voltage changes.

As indicated in Table 1 and Fig. 2, in STEP 4 to STEP 7, the temperature of the heater 121 gradually increases to 270°C. As such, control information covering multiple STEPs may be defined. Subsequently, in STEP 8, the temperature of the heater 121 is maintained at 270°C.

In STEP 4 to STEP 8, power is supplied to the heater 121 at a relatively low voltage. This is because in STEP 4 to STEP 8, it is not necessary to rapidly increase the temperature of the heater 121 nor to maintain the temperature of the heater 121 with in a range of high temperatures. Using a relatively low voltage in STEP 4 to STEP 8 suppresses total power consumption during the heating session.

As indicated in Table 1 and Fig. 2, in STEP 9, the temperature of the heater 121 decreases. In STEP 9, power supply to the heater 121 is turned off. At the same time, the voltage applied to the heater 121 is changed from low to high. As a result, the subsequent heating session begins with a relatively high voltage. Furthermore, changing the voltage while power is not supplied to the heater 121 prevents the degradation of temperature control precision that can occur with voltage changes. Regarding STEP 9, while the duration is specified, the target temperature is not specified. Thus, STEP 9 terminates in response to the end of the duration, which serves as a trigger. In STEP 9, an adequate amount of aerosol can be generated by the residual heat of the stick substrate 150. Thus, in this example, the puff-available period, and consequently the heating session, terminates when STEP 9 ends.

The notifier 113 may provide information indicating when preheating ends to the user. For example, the notifier 113 provides information that notifies in advance the user about the upcoming end of preheating before preheating ends, or information that notifies the user that preheating has ended at the end timing of preheating. Notification to the user may be performed using, for example, light-emitting diode (LED) illumination or vibration. Based on these notifications, the user can start puffing immediately after the end of preheating.

Similarly, the notifier 113 may provide information indicating when the puff-available period ends to the user. For example, the notifier 113 provides information that notifies in advance the user about the upcoming end of the puff-available period before the puff-available period ends, or information that notifies the user that the puff-available period has ended at the end timing of the puff-available period. Notification to the user may be performed using, for example, LED illumination or vibration. Based on these notifications, the user can continue puffing until the puff-available period ends.

The heating profile described above is provided for illustrative purposes, and various other examples can be considered. In an example, the number of STEPs, the duration of each STEP, and the target temperature may be changed in any appropriate manner. In another example, in STEP 4, the temperature of the heater 121 may be maintained at 220°C.

### 2. 2. Thermistor temperature-based control

The controller 116 controls the operation of the heater 121 while referencing the temperature of the heater 121. The temperature of the heater 121 may be calculated based on the electrical resistance of the heater 121 or may be detected by the thermistor included in the sensor 112. The temperature of the heater 121 calculated based on the electrical resistance of the heater 121 is also referred to as the heater temperature. The temperature of the heater 121 detected by the thermistor included in the sensor 112 is also referred to as the thermistor temperature.

The heating session includes a period for controlling the operation of the heater 121 based on the heater temperature and a period for controlling the operation of the heater 121 based on the thermistor temperature. For example, the controller 116 may control the operation of the heater 121 based on the thermistor temperature in STEP 3 of the heating session indicated in Table 1 and Fig. 2. This is because in STEP 3, power supply to the heater 121 is turned off, which makes the electrical resistance of the heater 121 difficult to detect. Conversely, the controller 116 may control the operation of the heater 121 based on the heater temperature in the period sections other than STEP 3 of the heating session indicated in Table 1 and Fig. 2. This configuration ensures precise temperature control based on the heater temperature for the majority of the heating session. Additionally, this configuration also provides temperature control according to the heating profile during periods when calculating heater temperature is difficult.

It is assumed that the temperature of the heater 121 and the heater temperature are equal. By contrast, the temperature of the heater 121 and the thermistor temperature sometimes exhibit discrepancies. This occurs because the thermistor is warmed more slowly by the heat of the heater 121. In other words, the thermistor temperature increases more slowly than the temperature rise of the heater 121. Similarly, the thermistor temperature decreases more slowly than the temperature drop of the heater 121. Thus, during the period when the operation of the heater 121 is controlled based on the thermistor temperature, the temperature of the heater 121 cannot follow the changes specified in the heating profile. This may result in the deterioration of the smoke taste delivered to the user.

In view of this possibility, during the period of controlling the operation of the heater 121 based on the thermistor temperature, the controller 116 performs an adjustment operation to adjust the target temperature and controls the operation of the heater 121. For example, the controller 116 performs the adjustment operation to decrease the target value that is set as the target temperature of the heater 121. This is because the thermistor temperature is usually lower than the temperature of the heater 121. By controlling the operation of the heater 121 such that the thermistor temperature matches the adjusted target temperature, the controller 116 changes the temperature of the heater 121 as specified in the heating profile. This configuration hinders the deterioration of the smoke taste delivered to the user that can occur due to the discrepancy between the temperature of the heater 121 and the thermistor temperature.

As described with reference to Table 1 and Fig. 2, the heating profile includes information about multiple STEPs that exhibit different tendencies to change the temperature of the heater 121. For example, the heating profile includes STEPs in which the temperature of the heater 121 increases, STEPs in which the temperature of the heater 121 decreases, and STEPs in which the temperature of the heater 121 is maintained. The controller 116 may perform the adjustment operation during periods when time control is not performed. Specifically, the controller 116 may perform the adjustment operation and determine to proceed from a specific STEP in response to a trigger from the thermistor temperature reaching the target temperature that is set for the specific STEP. More specifically, the controller 116 may adjust the target temperature that is set for the specific STEP, and in response to a trigger from the thermistor temperature reaching the adjusted target temperature, determine to proceed from the specific STEP. This configuration prevents deviations in the timing when determining to proceed from the ongoing STEP, which can occur due to the discrepancy between the temperature of the heater 121 and the thermistor temperature. As a result, it is possible to hinder the deterioration of the smoke taste delivered to users.

The controller 116 may perform the adjustment operation in STEPs in which the temperature of the heater 121 increases or decreases. This is because the thermistor temperature increases or decreases more slowly, following the temperature rise or drop of the heater 121. This configuration effectively performs adjustment in STEPs in which the temperature change in the thermistor lags behind the temperature change in the heater 121. As a result, this configuration hinders the deterioration of the smoke taste delivered to the user that can occur due to the discrepancy between the temperature of the heater 121 and the thermistor temperature.

The controller 116 may perform the adjustment operation in STEPs in which power supply to the heater 121 is stopped, and in response to a trigger from the thermistor temperature decreasing to the target temperature that is set for the current STEP, restart power supply to the heater 121. Specifically, the controller 116 may adjust the target temperature that is set for the current STEP in which power supply to the heater 121 is stopped, and in response to a trigger from the thermistor temperature reaching the adjusted target temperature, restart power supply to the heater 121. During the period from when power supply to the heater 121 stops until power supply to the heater 121 restarts, the discrepancy between the temperature of the heater 121 and the thermistor temperature tends to increase. In this regard, this configuration restarts power supply to the heater 121 at appropriate timings.

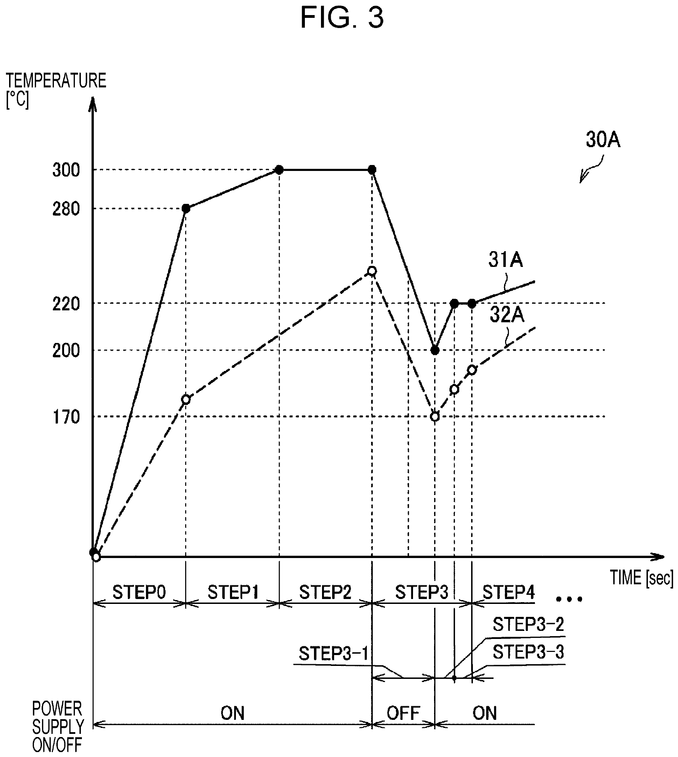

A heating profile when the operation of the heater 121 is controlled based on the thermistor temperature will be described with reference to Table 2 and Fig. 3. In Table 2, STEP 3 of the heating profile indicated in Table 1 is divided into sub-periods. Other STEPs are the same as in Table 1.

**[Table 2]**

| Table 2. Details of STEP 3 of heating profile indicated in Table 1 | | | | |
|---|---|---|---|---|
| Period | | Target temperature time-series change | Power supply parameter time-series change | |
| Division | Duration | | Voltage | ON/OFF |
| STEP 3-1 | - | 200°C (Thermistor temperature) | Change to low | OFF |
| STEP 3-2 | - | 220°C (Heater temperature) | Low | ON |
| STEP 3-3 | 20 seconds for entire STEP3 | 220°C (Heater temperature) | Low | ON |

Fig. 3 illustrates an example of control based on the thermistor temperature according to the present embodiment. A graph 30A in Fig. 3 illustrates changes in the temperature of the heater 121 and changes in the thermistor temperature in the first half of the process, specifically STEP 0 to STEP 4, when temperature control is performed in accordance with the heating profile indicated in Table 2. A line 31A plots changes in the temperature of the heater 121. A line 32A plots changes in the thermistor temperature. The lines 31A and 32A in Fig. 3 illustrate temperature changes without chain smoking, which will be described later.

As indicated in Table 2 and by the line 31A, STEP 3 is divided into three periods: STEP 3-1, STEP 3-2, and STEP 3-3. After the duration of STEP 2 elapses, the controller 116 suspends the power supply from the power supply 111 to the heater 121 in STEP 3-1. As a result, the temperature of the heater 121 decreases. When the temperature of the heater 121 decreases excessively, the smoke taste delivered to the user can deteriorate. To address this issue, when the temperature of the heater 121 falls below 200°C, the controller 116 determines to proceed from STEP 3-1 to STEP 3-2. In other words, the controller 116 restarts power supply to the heater 121 to restart heating. Subsequently, in STEP 3-2, the controller 116 increases the temperature of the heater 121 until the temperature of the heater 121 reaches 220°C. To prevent deterioration of the smoke taste, the controller 116 does not perform time control in STEP 3-2. This is because it is desirable to rapidly increase the temperature of the heater 121. In STEP 3-3, the controller 116 performs time control to ensure that the total duration of STEP 3-1, STEP 3-2, and STEP 3-3 equals 20 seconds. To achieve this, the controller 116 maintains the temperature of the heater 121 at 220°C until the 20-second duration ends.

As illustrated by the line 32A, the thermistor temperature increases or decreases more slowly, following the temperature rise or drop of the heater 121. However, it is observed that the discrepancy between the temperature of the heater 121 and the thermistor temperature decreases as time elapses from the start of heating. This occurs because the thermistor warms as time elapses from the start of heating. For example, in STEP 0 and STEP 1, the thermistor temperature increases more slowly, following the temperature rise of the heater 121. In STEP 2, the thermistor temperature continues to increase while the temperature of the heater 121 is maintained. As a result, the discrepancy between the temperature of the heater 121 and the thermistor temperature is reduced. After the process enters STEP 3-1, the temperature of the heater 121 decreases, and as a result, the thermistor temperature also decreases. In STEP 3-1, the thermistor temperature is 170°C when the temperature of the heater 121 decreases to 200°C.

STEP 3-2 and STEP 3-3 correspond to periods during which the operation of the heater 121 is controlled based on the heater temperature. The controller 116 thus controls the operation of the heater 121 based on the target temperature, heater temperature, and duration without performing the adjustment operation.

By contrast, STEP 3-1 corresponds to a period during which the operation of the heater 121 is controlled based on the thermistor temperature. Specifically, in STEP 3-1, the controller 116 stops power supply to the heater 121, and while performing the adjustment operation to adjust the target temperature, determines whether to restart power supply to the heater 121. For example, the controller 116 adjusts the target temperature downward by 30°C in STEP 3-1. Since the target temperature for STEP 3-1 is 200°C, the adjusted target temperature is 170°C. Accordingly, in STEP 3-1, the controller 116 determines whether the thermistor temperature has decreased to the adjusted target temperature of 170°C. When it is determined that the thermistor temperature has decreased to 170°C, the controller 116 restarts power supply to the heater 121. In this manner, power supply to the heater 121 can be restarted at the timing when the temperature of the heater 121 decreases to 200°C. In other words, as illustrated by the line 31A, the temperature of the heater 121 can be changed as specified in the heating profile.

The controller 116 performs the adjustment operation during the first half of the heating session, for example, in STEP 3-1. This is because it is assumed that the thermistor is not sufficiently warmed during the first half of the heating session, and the discrepancy between the temperature of the heater 121 and the thermistor temperature can be relatively large. This configuration more effectively hinders the deterioration of the smoke taste delivered to users.

As a possible scenario here, the action of repeatedly replacing the stick substrate 150 and performing heating multiple times at short intervals, which is called chain smoking, can be performed. When chain smoking is performed, the thermistor temperature during the second and subsequent heating instances is higher than the thermistor temperature at the first heating instance. This occurs because while the thermistor remains warm from the previous heating instance, the second heating instance starts before the thermistor has cooled down. As a result, if no countermeasures are implemented, excessive adjustments may be made during the adjustment operation. Specifically, during the period when the operation of the heater 121 is controlled based on the thermistor temperature, the temperature of the heater 121 cannot follow the changes specified in the heating profile. This may result in the deterioration of the smoke taste delivered to the user.

In view of this possibility, the controller 116 adjusts the target temperature based on the initial temperature of the heater 121 as the adjustment operation during the period of controlling the operation of the heater 121 based on the thermistor temperature. The initial temperature of the heater 121 may be calculated based on the electrical resistance of the heater 121 measured at the start of power supply to the heater 121, or the thermistor temperature at the start of power supply to the heater 121 may be used as the initial temperature of the heater 121. This configuration hinders the deterioration of the smoke taste delivered to users that can occur due to chain smoking. The initial temperature may be detected before or at the same time as the start of heating, after a user operation to provide an instruction to start heating is detected.

Specifically, the controller 116 adjusts the target temperature downward by an adjustment amount. Compared to when the initial temperature of the heater 121 is a first temperature, the adjustment amount is greater when the initial temperature of the heater 121 is a second temperature that is lower than the first temperature. More simply, the higher the initial temperature of the heater 121, the smaller the adjustment amount; the lower the initial temperature of the heater 121, the greater the adjustment amount. This implies that the controller 116 decreases the degree of the target temperature reduction as the initial temperature of the heater 121 increases. This is because it is assumed that the thermistor temperature increases as the initial temperature of the heater 121 increases, and the discrepancy between the temperature of the heater 121 and the thermistor temperature can be relatively small. Conversely, the controller 116 increases the degree of the target temperature reduction as the initial temperature of the heater 121 decreases. This is because it is assumed that the thermistor temperature decreases as the initial temperature of the heater 121 decreases, and the discrepancy between the temperature of the heater 121 and the thermistor temperature can be relatively large. The controller 116 may set the adjustment amount based on a threshold: for example, when the initial temperature of the heater 121 is lower than a predetermined threshold, the adjustment amount is set to 30°C; when the initial temperature of the heater 121 is higher than the predetermined threshold, the adjustment amount is set to 10°C. One or more thresholds may be set. This configuration hinders the deterioration of the smoke taste delivered to users that can occur due to chain smoking.

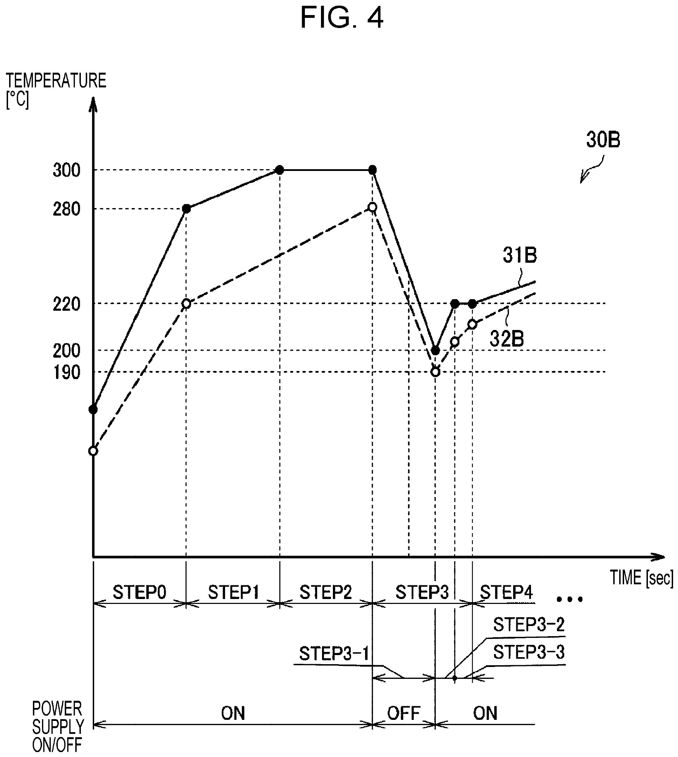

An adjustment operation based on the initial temperature of the heater 121 will be specifically described while comparing Figs. 3 and 4.

Fig. 4 illustrates an example of control based on the thermistor temperature according to the present embodiment. A graph 30B in Fig. 4 illustrates changes in the temperature of the heater 121 and changes in the thermistor temperature in the first half of the process, specifically STEP 0 to STEP 4, when temperature control is performed in accordance with the heating profile indicated in Table 2, during chain smoking. A line 31B plots changes in the temperature of the heater 121. A line 32B plots changes in the thermistor temperature.

Comparison between the line 31A in Fig. 3 and the line 31B in Fig. 4 indicates that the initial temperature of the heater 121 is higher when chain smoking is performed than when chain smoking is not performed. Comparison between the line 32A in Fig. 3 and the line 32B in Fig. 4 indicates that the discrepancy between the temperature of the heater 121 and the thermistor temperature is smaller when chain smoking is performed than when chain smoking is not performed. For example, in STEP 3-1, the thermistor temperature is 190°C when the temperature of the heater 121 decreases to 200°C.

Thus, in the example illustrated in Fig. 4, the controller 116 adjusts the target temperature downward by 10°C in STEP 3-1. The adjustment amount of 10°C is smaller than the adjustment amount of 30°C in the example illustrated in Fig. 3. Since the target temperature for STEP 3-1 is 200°C, the adjusted target temperature is 190°C. Accordingly, in STEP 3-1, the controller 116 determines whether the thermistor temperature has decreased to the adjusted target temperature of 190°C. When it is determined that the thermistor temperature has decreased to 190°C, the controller 116 restarts power supply to the heater 121. In this manner, power supply to the heater 121 can be restarted at the timing when the temperature of the heater 121 decreases to 200°C. That is, as illustrated in line 31B, it becomes possible to move the temperature of the heater 121 as specified in the heating profile.

The controller 116 may control the operation of the heater 121 in accordance with one heating profile selected from multiple heating profiles. The heating profiles to be used by the controller 116 can be stored in the memory 114, and, for example, the user can select a specific heating profile to use. In this case, the controller 116 may use a predetermined value as the adjustment amount regardless of which of the heating profiles is selected. For example, regardless of which of the heating profiles is selected, the controller 116 may set the adjustment amount to 30°C when the initial temperature of the heater 121 is relatively low and to 10°C when the initial temperature of the heater 121 is relatively high. This configuration provides appropriate adjustments when the heating profile is changed to another heating profile, and the target temperature of STEP 3-1 is accordingly changed. This configuration is particularly effective under specific circumstances where a new heating profile can be downloaded and used, or the heating profile can be customized by users. This is because it is unnecessary to predetermine and store the adjustment amount for each heating profile to suit the initial temperature of the heater 121.

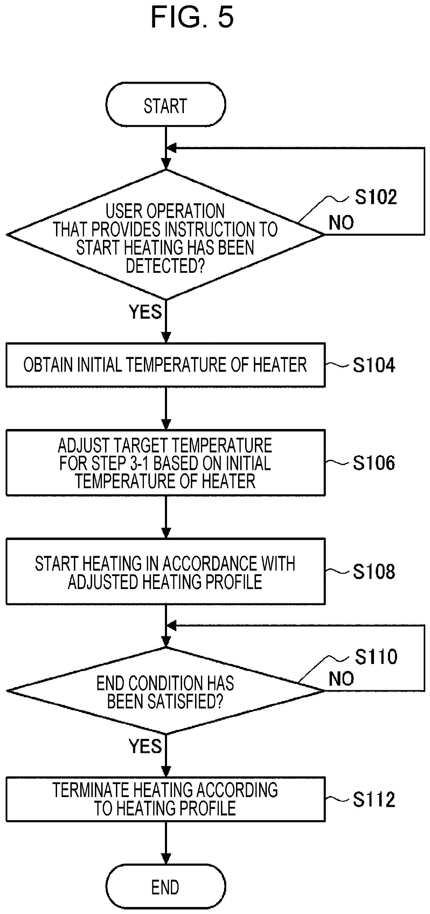

The following describes a process flow performed by the inhaler device 100 according to the present embodiment with reference to Fig. 5.

Fig. 5 is a flowchart illustrating an exemplary process flow performed by the inhaler device 100 according to the present embodiment. This flowchart illustrates an exemplary process flow when temperature control illustrated in Figs. 3 and 4 is performed.

As illustrated in Fig. 5, first, the controller 116 determines whether a user operation that provides an instruction to start heating has been detected (step S 102). One example of the user operation that provides an instruction to start heating is performing an operation on the inhaler device 100 such as operating a control such as a switch provided on the inhaler device 100. One example of the user operation that provides an instruction to start heating is inserting the stick substrate 150 into the inhaler device 100.

When it is determined that no user operation that provides an instruction to start heating is detected (NO in step S102), the controller 116 waits until any user operation that provides an instruction to start heating is detected.

When it is determined that a user operation that provides an instruction to start heating is detected (YES in step S102), the controller 116 obtains the initial temperature of the heater 121 (step S104). The initial temperature of the heater 121 is detected by the thermistor.

Next, the controller 116 adjusts the target temperature for STEP 3-1 based on the initial temperature of the heater 121 (step S106). For example, the controller 116 sets the adjustment amount to 30°C when the initial temperature of the heater 121 is lower than a predetermined threshold and to 10°C when the initial temperature of the heater 121 is higher than the predetermined threshold. The controller 116 adjusts the target temperature for STEP 3-1 downward by the adjustment amount. Specifically, when the initial temperature of the heater 121 is lower than a predetermined threshold, the controller 116 sets the target temperature for STEP 3-1 to 170°C. By contrast, when the initial temperature of the heater 121 is higher than a predetermined threshold, the controller 116 sets the target temperature for STEP 3-1 to 190°C.

Next, the controller 116 starts heating in accordance with the adjusted heating profile (step S108). For example, the controller 116 starts power supply from the power supply 111 to the heater 121 in accordance with the adjusted heating profile. In particular, the controller 116 controls the operation of the heater 121 based on the adjusted target temperature in STEP 3-1. In an example, when the initial temperature of the heater 121 is lower than a predetermined threshold, the controller 116 restarts power supply to the heater 121 in response to a trigger from the thermistor temperature decreasing to the adjusted target temperature of 170°C. The temperature change in this case is as described above with reference to Fig. 3. In another example, when the initial temperature of the heater 121 is higher than the predetermined threshold, the controller 116 restarts power supply to the heater 121 in response to a trigger from the thermistor temperature decreasing to the adjusted target temperature of 190°C. The temperature change in this case is as described above with reference to Fig. 4.

Subsequently, the controller 116 determines whether an end condition has been satisfied (step 5110). One example of the end condition is the elapse of the duration of STEP 9. Another example of the end condition is that the number of puffs since the start of heating reaches a predetermined number.

When it is determined that the end condition is not satisfied (NO in step S110), the controller 116 waits until the end condition is satisfied.

When it is determined that the end condition is satisfied (YES in step S110), the controller 116 terminates heating according to the heating profile (step S112). The process then ends.

The flow described above is an example in which the initial temperature of the heater 121 is detected by the thermistor when power supply to the heater 121 is started. However, the initial temperature of the heater 121 may be obtained based on the electrical resistance of the heater 121 when power supply to the heater 121 is started. In this case, the order of the operations in steps S102 to S108 is changed to the order of S102, S108, S104, and S106.

### 3. Supplement

A preferred embodiment of the present invention has been described in detail with reference to the accompanying drawings, but the present invention is not limited to this example. It is understood that various modifications and alterations within the scope of the technical idea indicated in the appended claims may occur to those skilled in the art and are also embraced within the technical scope of the present invention.

The discussion of the embodiment has described an example of adjusting the target temperature in the adjustment operation. However, the present invention is not limited to this example. The controller 116 may adjust the thermistor temperature in the adjustment operation. In an example, the controller 116 adjusts the detected thermistor temperature upward. This is because the thermistor temperature is usually lower than the temperature of the heater 121. By controlling the operation of the heater 121 such that the adjusted thermistor temperature matches the target temperature, the controller 116 changes the temperature of the heater 121 as specified in the heating profile. Similarly to the embodiment described above, this configuration hinders the deterioration of the smoke taste delivered to the user that can occur due to the discrepancy between the temperature of the heater 121 and the thermistor temperature.

The controller 116 may adjust the thermistor temperature based on the initial temperature of the heater 121 as the adjustment operation during the period of controlling the operation of the heater 121 based on the thermistor temperature. Specifically, the controller 116 adjusts the detected thermistor temperature upward by an adjustment amount. Compared to when the initial temperature of the heater 121 is a first temperature, the adjustment amount is greater when the initial temperature of the heater 121 is a second temperature that is lower than the first temperature. More simply, the higher the initial temperature of the heater 121, the smaller the adjustment amount; the lower the initial temperature of the heater 121, the greater the adjustment amount. This implies that the controller 116 decreases the degree of the thermistor temperature increase as the initial temperature of the heater 121 increases. This is because it is assumed that the thermistor temperature increases as the initial temperature of the heater 121 increases, and the discrepancy between the temperature of the heater 121 and the thermistor temperature can be relatively small. Conversely, the controller 116 increases the degree of the thermistor temperature increase as the initial temperature of the heater 121 decreases. This is because it is assumed that the thermistor temperature decreases as the initial temperature of the heater 121 decreases, and the discrepancy between the temperature of the heater 121 and the thermistor temperature can be relatively large. For example, the controller 116 may set the adjustment amount based on a threshold: for example, when the initial temperature of the heater 121 is lower than a predetermined threshold, the adjustment amount is set to 30°C; when the initial temperature of the heater 121 is higher than the predetermined threshold, the adjustment amount is set to 10°C. One or more thresholds may be set. This configuration hinders the deterioration of the smoke taste delivered to users that can occur due to chain smoking.

The discussion of the embodiment has described an example in which the controller 116 performs the adjustment operation during periods when time control is not performed. However, the present invention is not limited to this example. The controller 116 may perform the adjustment operation during periods when time control is performed. For example, the controller 116 may adjust the target temperature that is set for a specific STEP, control the thermistor temperature to reach the adjusted target temperature at the end of the duration, and in response to a trigger from the elapse of the duration, determine to proceed from the specific STEP. This configuration prevents deviations between the temperature of the heater 121 and the target temperature when proceeding from the ongoing STEP, which can occur due to the discrepancy between the temperature of the heater 121 and the thermistor temperature. As a result, it is possible to hinder the deterioration of the smoke taste delivered to users.

The discussion of the embodiment has described an example of controlling the operation of the heater 121 and performing the adjustment operation based on the thermistor temperature in STEP 3-1. However, the present invention is not limited to this example. Controlling the operation of the heater 121 and performing the adjustment operation based on the thermistor temperature may be implemented during any period specified in the heating profile. For example, controlling the operation of the heater 121 and performing the adjustment operation based on the thermistor temperature may be implemented in STEP 0. Controlling the operation of the heater 121 and performing the adjustment operation based on the thermistor temperature may be implemented during all periods specified in the heating profile.

The discussion of the embodiment has described an example in which one adjustment amount is used in one heating session. However, the present invention is not limited to this example. Multiple kinds of adjustment amounts may be used in one heating session. In this case, the controller 116 may designate an adjustment amount among the adjustment amounts based on the time elapsed since heating according to the heating profile started. For example, when the control of the operation of the heater 121 and adjustment operation based on the thermistor temperature are performed in STEP 0 and STEP 3-1, the controller 116 may use a first adjustment amount in STEP 0 and a second adjustment amount in STEP 3-1. In this case, it is desirable that the adjustment amount decreases as time elapses since the start of heating according to the heating profile. This is because as time elapses since the start of heating according to the heating profile, the thermistor warms, and as a result, the discrepancy between the temperature of the heater 121 and the thermistor temperature decreases. This implies that it is desirable the second adjustment amount is smaller than the first adjustment amount. This configuration implements the adjustment operation in an appropriate manner that accommodates changes in the discrepancy between the temperature of the heater 121 and the thermistor temperature.

The discussion of the embodiment has described an example in which the adjustment operation is performed based on the initial temperature of the heater 121. However, the present invention is not limited to this example. It is sufficient that the adjustment operation is performed based on any parameter corresponding to the initial temperature of the heater 121. In an example, the electrical resistance of the heater 121 at the start of heating or the electrical resistance of the thermistor provided near the heater 121 may be used as a parameter corresponding to the initial temperature of the heater 121. In another example, a parameter corresponding to the temperature of the inhaler device 100 may be used as a parameter corresponding to the initial temperature of the heater 121. The parameter corresponding to the temperature of the inhaler device 100 may be, for example, the temperature detected by a thermistor positioned away from the heater 121. It may be assumed that the higher the temperature of the inhaler device 100 at the start of heating, the higher the initial temperature of the heater 121; and the lower the temperature of the inhaler device 100 at the start of heating, the lower the initial temperature of the heater 121. In another example, the time elapsed since the previous heating by the heater 121 ended, in other words, the interval in chain smoking, may be used as a parameter corresponding to the initial temperature of the heater 121. It may be assumed that the shorter the interval in chain smoking, the higher the initial temperature of the heater 121; and the longer the interval in chain smoking, the lower the initial temperature of the heater 121 may be treated.

The discussion of the embodiment has described an example in which the heating profile includes a target value of the temperature of the heater 121. However, the present invention is not limited to this example. It is sufficient that the heating profile includes a target value of a parameter related to the temperature of the heater 121. Examples of the parameter related to the temperature of the heater 121 include the electrical resistance of the heater 121, as well as the temperature of the heater 121 described in the embodiment. For the periods during which the operation of the heater 121 is controlled based on the thermistor temperature, a target value of the electrical resistance of the thermistor may be included in the heating profile.

The discussion of the embodiment has described an example in which the heater 121 is implemented as a thermal resistor, designed to generate heat through electrical resistance. However, the present invention is not limited to this example. For example, the heater 121 may include an electromagnetic induction source such as a coil that generates magnetic fields and a susceptor that generates heat through induction heating. The susceptor may consequently heat the stick substrate 150. In this case, the controller 116 controls the electromagnetic induction source to generate alternating magnetic fields by applying an alternating current, thereby causing the susceptor to generate heat in response to the alternating magnetic fields affecting the susceptor. The susceptor that generate heat through induction heating is provided in the inhaler device 100. In this case, the temperature at which the aerosol source controlled according to the heating profile is heated is equal to the temperature of the susceptor. The temperature of the susceptor can be estimated based on the electrical resistance of the susceptor that is calculated from the impedance of the circuit including the electromagnetic induction source. In this case, the electrical resistance of the heater 121 described above as a parameter related to the temperature of the heater 121 may be the calculated electrical resistance of the susceptor.

The series of operations performed by the device described in this specification may be implemented by software, hardware, or a combination of software and hardware. A program configured as software is pre-stored, for example, inside the device or in an external storage medium (specifically, computer-readable non-transitory medium). For example, when a computer for controlling the device described in this specification runs the program, the program is loaded on a RAM and executed by a processing circuit such as a CPU. The storage medium may be, for example, a magnetic disk, optical disk, magneto-optical disk, or flash memory. Instead of using the storage medium, the computer program described above may be, for example, delivered through networks. The computer may be, for example, a special-purpose integrated circuit such as an application-specific integrated circuit (ASIC), a general-purpose processor designed to implement functions by loading a software program, or a computer on a server used for cloud computing. The series of operations performed by the devices described in the present specification may be performed separately by multiple computers.

The operations described using a flowchart and sequence diagrams in this specification are not necessarily performed in the order illustrated. Some of the operational steps may be parallelly performed. Alternatively, additional operational steps may be used, or some operational steps may be removed.

The following configurational features are also encompassed within the technical scope of the present invention.
(1)
   An aerosol generation system comprising:
   a heater configured to heat an aerosol source;
   a temperature sensor configured to detect a temperature of the heater from outside the heater; and
   a controller configured to control an operation of the heater in accordance with a control information set that includes a parameter corresponding to a target temperature, the target temperature being a target value of the temperature of the heater, wherein
   the controller is configured to, during a period when controlling the operation of the heater based on the temperature of the heater detected by the temperature sensor, perform an adjustment operation that adjusts the target temperature or the temperature of the heater detected by the temperature sensor and accordingly control the operation of the heater.
(2)
   The aerosol generation system according to (1), wherein
   the controller is configured to, in the adjustment operation, adjust the target temperature or the temperature of the heater detected by the temperature sensor, based on a parameter corresponding to an initial temperature of the heater.
(3)
   The aerosol generation system according to (2), wherein
   the controller is configured to adjust the target temperature downward by an adjustment amount, and
   compared to when the initial temperature of the heater is a first temperature, the adjustment amount is greater when the initial temperature of the heater is a second temperature that is lower than the first temperature.
(4)
   The aerosol generation system according to (2), wherein
   the controller is configured to adjust the temperature of the heater detected by the temperature sensor upward by an adjustment amount, and
   compared to when the initial temperature of the heater is a first temperature, the adjustment amount is greater when the initial temperature of the heater is a second temperature that is lower than the first temperature.
(5)
   The aerosol generation system according to (3) or (4), wherein
   the control information set is one of a plurality of control information sets, each control information set including a parameter corresponding to a target temperature that is a target value of the temperature of the heater, the controller is configured to control the operation of the heater in accordance with a control information set selected from the plurality of control information sets, and the controller is configured to use a predetermined value as the adjustment amount regardless of which of the plurality of control information sets is selected.
(6)
   The aerosol generation system according to any one of (3) to (5), wherein
   the controller is configured to change the adjustment amount based on a time elapsed after heating of the aerosol source according to the control information set is started.
(7)
   The aerosol generation system according to any one of (1) to (6), wherein
   the control information set includes information of a plurality of unit periods that have different change patterns in the temperature of the heater, and
   the controller is configured to perform the adjustment operation and determines to proceed from a specific unit period among the plurality of unit periods in response to a trigger from the temperature of the heater detected by the temperature sensor reaching the target temperature that is set for the specific unit period.
(8)
   The aerosol generation system according to (7), wherein
   the controller is configured to perform the adjustment operation during a specific unit period in which the temperature of the heater increases or decreases among the plurality of unit periods.
(9)
   The aerosol generation system according to (8), comprising a power supply, wherein
   the heater is configured to heat the aerosol source using power supplied from the power supply, and
   the controller is configured to perform the adjustment operation during a specific unit period in which power supply to the heater is stopped among the plurality of unit periods, and in response to a trigger from the temperature of the heater detected by the temperature sensor decreasing to the target temperature that is set for the specific unit period, restart power supply to the heater.
(10)
   The aerosol generation system according to any one of (1) to (9), wherein
   the controller is configured to perform the adjustment operation during a first half of a period of controlling the operation of the heater in accordance with the control information set.
(11)
   The aerosol generation system according to any one of (1) to (10), wherein
   a period of controlling the operation of the heater in accordance with the control information set includes a period of controlling the operation of the heater based on an electrical resistance of the heater instead of the temperature of the heater detected by the temperature sensor.
(12)
   The aerosol generation system according to any one of (1) to (11), further comprising:
   a substrate containing the aerosol source configured to be heated by the heater.
(13)
   A control method for controlling an aerosol generation system,
   the aerosol generation system including
   a heater configured to heat an aerosol source, and
   a temperature sensor configured to detect a temperature of the heater from outside the heater,
   the control method comprising:
      controlling an operation of the heater in accordance with a control information set that includes a parameter corresponding to a target temperature, the target temperature being a target value of the temperature of the heater, wherein
      the controlling the operation of the heater in accordance with the control information set includes, during a period when controlling the operation of the heater based on the temperature of the heater detected by the temperature sensor, performing an adjustment operation that adjusts the target temperature or the temperature of the heater detected by the temperature sensor and accordingly controlling the operation of the heater.
(14)
   A program executed by a computer for controlling an aerosol generation system,
   the aerosol generation system including
   a heater configured to heat an aerosol source, and
   a temperature sensor configured to detect a temperature of the heater from outside the heater,
   the program configured to cause the computer to operate as
   a controller configured to control an operation of the heater in accordance with a control information set that includes a parameter corresponding to a target temperature, the target temperature being a target value of the temperature of the heater, wherein
   the controller is configured to, during a period when controlling the operation of the heater based on the temperature of the heater detected by the temperature sensor, perform an adjustment operation that adjusts the target temperature or the temperature of the heater detected by the temperature sensor and accordingly control the operation of the heater.

### Reference Signs List

- 100: inhaler device
- 111: power supply
- 112: sensor
- 113: notifier
- 114: memory
- 115: communicator
- 116: controller
- 121: heater
- 140: holder
- 141: internal space
- 142: opening
- 143: bottom
- 144: heat insulator
- 150: stick substrate
- 151: substrate
- 152: inhalation port

## Claims

1. An aerosol generation system comprising:
a heater configured to heat an aerosol source, and
a temperature sensor configured to detect a temperature of the heater from outside the heater; and
a controller configured to control an operation of the heater in accordance with a control information set that includes a parameter corresponding to a target temperature, the target temperature being a target value of the temperature of the heater, wherein
the controller is configured to, during a period when controlling the operation of the heater based on the temperature of the heater detected by the temperature sensor, perform an adjustment operation that adjusts the target temperature or the temperature of the heater detected by the temperature sensor and accordingly control the operation of the heater.

2. The aerosol generation system according to claim 1, wherein
the controller is configured to, in the adjustment operation, adjust the target temperature or the temperature of the heater detected by the temperature sensor, based on a parameter corresponding to an initial temperature of the heater.

3. The aerosol generation system according to claim 2, wherein
the controller is configured to adjust the target temperature downward by an adjustment amount, and
compared to when the initial temperature of the heater is a first temperature, the adjustment amount is greater when the initial temperature of the heater is a second temperature that is lower than the first temperature.

4. The aerosol generation system according to claim 2, wherein
the controller is configured to adjust the temperature of the heater detected by the temperature sensor upward by an adjustment amount, and
compared to when the initial temperature of the heater is a first temperature, the adjustment amount is greater when the initial temperature of the heater is a second temperature that is lower than the first temperature.

5. The aerosol generation system according to claim 3 or 4, wherein
the control information set is one of a plurality of control information sets, each control information set including a parameter corresponding to a target temperature that is a target value of the temperature of the heater, the controller is configured to control the operation of the heater in accordance with a control information set selected from the plurality of control information sets, and the controller is configured to use a predetermined value as the adjustment amount regardless of which of the plurality of control information sets is selected.

6. The aerosol generation system according to any one of claims 3 to 5, wherein
the controller is configured to change the adjustment amount based on a time elapsed after heating of the aerosol source according to the control information set is started.

7. The aerosol generation system according to any one of claims 1 to 6, wherein
the control information set includes information of a plurality of unit periods that have different change patterns in the temperature of the heater, and
the controller is configured to perform the adjustment operation and determines to proceed from a specific unit period among the plurality of unit periods in response to a trigger from the temperature of the heater detected by the temperature sensor reaching the target temperature that is set for the specific unit period.

8. The aerosol generation system according to claim 7, wherein
the controller is configured to perform the adjustment operation during a specific unit period in which the temperature of the heater increases or decreases among the plurality of unit periods.

9. The aerosol generation system according to claim 8, comprising a power supply, wherein
the heater is configured to heat the aerosol source using power supplied from the power supply, and
the controller is configured to perform the adjustment operation during a specific unit period in which power supply to the heater is stopped among the plurality of unit periods, and in response to a trigger from the temperature of the heater detected by the temperature sensor decreasing to the target temperature that is set for the specific unit period, restart power supply to the heater.

10. The aerosol generation system according to any one of claims 1 to 9, wherein
the controller is configured to perform the adjustment operation during a first half of a period of controlling the operation of the heater in accordance with the control information set.

11. The aerosol generation system according to any one of claims 1 to 10, wherein
a period of controlling the operation of the heater in accordance with the control information set includes a period of controlling the operation of the heater based on an electrical resistance of the heater instead of the temperature of the heater detected by the temperature sensor.

12. The aerosol generation system according to any one of claims 1 to 11, further comprising:
a substrate containing the aerosol source configured to be heated by the heater.

13. A control method for controlling an aerosol generation system,
the aerosol generation system including
a heater configured to heat an aerosol source, and
a temperature sensor configured to detect a temperature of the heater from outside the heater,
the control method comprising:
controlling an operation of the heater in accordance with a control information set that includes a parameter corresponding to a target temperature, the target temperature being a target value of the temperature of the heater, wherein
the controlling the operation of the heater in accordance with the control information set includes, during a period when controlling the operation of the heater based on the temperature of the heater detected by the temperature sensor, performing an adjustment operation that adjusts the target temperature or the temperature of the heater detected by the temperature sensor and accordingly controlling the operation of the heater.

14. A program executed by a computer for controlling an aerosol generation system,
the aerosol generation system including
a heater configured to heat an aerosol source, and
a temperature sensor configured to detect a temperature of the heater from outside the heater,
the program configured to cause the computer to operate as
a controller configured to control an operation of the heater in accordance with a control information set that includes a parameter corresponding to a target temperature, the target temperature being a target value of the temperature of the heater, wherein
the controller is configured to, during a period when controlling the operation of the heater based on the temperature of the heater detected by the temperature sensor, perform an adjustment operation that adjusts the target temperature or the temperature of the heater detected by the temperature sensor and accordingly control the operation of the heater.
